# EUROPEAN PATENT SPECIFICATION

(11) **EP 0 911 359 B1**
(45) Date of publication and mention of the grant of the patent: **07.04.2004**
(21) Application number: 97830470.7
(22) Date of filing: 25.09.1997
(51) Int. Cl.: C08K 3/36, C08J 3/20, B60C 1/00, B29C 47/50

(54) **Continuous process for producing rubber material containing silica filler and tyres incorporating this material**
Kontinuierliches Verfahren zur Herstellung eines Gummimaterials mit Füllstoff aus Kieselerde und dieses Material enthaltende Reifen
Procédé continu pour la fabrication d'un caoutchouc avec des charges de silice et pneus incorporant ce caoutchouc

(43) Date of publication of application: 28.04.1999
(73) Proprietor: PIRELLI PNEUMATICI Società per Azioni, 20126 Milano (IT)
(72) Inventor: Caretta, Renato, Gallarate (VA) (IT); Pessina, Roberto, Paderno Dugnano (MI) (IT); Proni, Antonio, Lodi (MI) (IT)
(74) Representative: Giannesi, Pier Giovanni

(56) References cited:
- EP-A- 0 663 421
- EP-A- 0 775 719
- US-A- 5 227 425
- US-A- 5 358 693
- US-A- 5 580 919
- US-A- 5 605 951

## Description

The present invention relates to a continuous process for producing a rubber compound which can be hot-crosslinked with sulphur, comprising a polymer base containing a crosslinkable unsaturated chain, supplemented with at least one silica filler and a silica-binding agent containing at least one sulphur atom.

In the following description and in the subsequent claims, the expression polymer base containing a crosslinkable unsaturated chain is intended to refer to any natural or synthetic, non-crosslinked polymer which can acquire all the physico-chemical and mechanical properties typical of elastomers after crosslinking (vulcanization) with sulphur-based systems.

In certain applications, rubber compounds for tyres reinforced by so-called "white" fillers are required; purely as a guide, it is pointed out here that these are inorganic-type reinforcing fillers such as chalk, talc, kaolin, bentonite, titanium dioxide, silicates of various types and silica, which are referred to hereinbelow as silica fillers for simplicity. In particular, it is known to use tread rubbers which comprise reinforcing silica fillers in order to reduce the tyre's resistance to rolling.

Since silica has little affinity for the polymer base, it is necessary to add a silica-binding agent, advantageously consisting of a silane, which is capable of chemically attaching the silica to the polymer matrix during vulcanization of the compound: the abovementioned chemical attachment is optimally achieved when the silica and the silane are incorporated into the compound together.

However, the need to incorporate the silica and the silane together into the compound places a constraint on the maximum temperature which can be reached during the mechanical processing of the compound by mixing: the temperature needs to be carefully maintained below 165°C, otherwise irreversible thermal degradation of the binding agent takes place.

Unfortunately, in complying with this temperature constraint, there is a substantial reduction precisely in this mechanical mixing action, which is essential for optimum dispersion of the silica in the polymer matrix.

The resulting insufficient dispersion of the silica in the compound in turn gives rise to a whole range of drawbacks essentially related to large variability and non-uniformity of the physico-mechanical properties of the mixture between one region and another.

Moreover, incorporation of the vulcanizing system into the compound also requires that a temperature of 110°C is not exceeded during processing, and since each mechanical processing operation involves a gradual increase in the temperature of the compound, the abovementioned compounds are produced by the so-called "batchwise" system, that is to say in non-continuous amounts, of about 200-300 kilograms for each load, so as to be able to stop the processing cycle in order to carry out alternating cooling cycles during manufacture of the compound.

A general process for the mechanical processing of a rubber compound with silica and silane is the subject of the publication "Silica based tread compounds: Background and performances", page 14, table IV, published by Degussa on the occasion of the Tyretech '93 conference which was held in Basilea on 28-29 October 1993.

According to that process, the silica and silane are added to the rubber compound at the same time, while keeping the processing temperature below 160-165°C in order to avoid premature crosslinking of the silane from taking place by exceeding this temperature.

From US patent 5,227,425, a process is also known for the production of tread bands which are obtained by mixing a polymer base formed of a diene conjugated with a vinylaromatic compound having a vinyl group content of between 5% and 50%, this polymer base having a high silica content and containing a silane.

The base polymer and the silica undergo mechanical processing in a mixer or extruder until a minimum temperature of 130°C but one not exceeding 180°C, and preferably between 145°C and 180°C is reached. According to another example, the polymer and the silica undergo mechanical processing in two distinct phases separated from each other by an intermediate cooling phase. In the first phase, the base polymer, the silica and crosslinking agent undergo mechanical processing until a temperature above 145°C, preferably between 145 and 170°C, is reached.

The blend obtained is cooled to a temperature below 100°C, preferably about 60°C, and, in a second phase, it then undergoes mechanical processing in a Banbury mixer (internal mixer) together with other ingredients, but not the vulcanization system, until a temperature of between 145 and 170°C is again reached.

Next, the blend thus obtained is again cooled to a temperature below 100°C, preferably about 60°C, after which the vulcanization system is added to the blend by means of a final mechanical processing operation in a two-cylinder mixer (external mixer), while keeping the temperature at a value below 100°C.

Italian patent IT 1 274 257, from the same Applicant, which is aimed at improving the dispersion of the silica in the base polymer, describes a process in which, firstly, the base polymer is mixed with the silica in a closed rotary mixer (Banbury) until a temperature of between 165 and 180°C is reached, after which the blend is cooled to room temperature.

In a second phase, the silane is added and the compound and the silane-binding agent again undergo intimate mixing in a Banbury mixer until a temperature of 135°C is reached, after which the compound is again cooled to room temperature.

In a final phase, the ingredients of the vulcanization system are added to the compound and further mixing is carried out in a Banbury mixer without exceeding a temperature of 100°C.

A number of continuous processes in which silicone rubbers, reinforcing fillers, including silica, and further ingredients, including silanes, are mixed together, are likewise known from patents EP 0,258,159 B1 and US 5,409,978.

In particular, the process of patent EP 0,258,159 B1 uses a twin-screw mixer followed in series by a single-screw extruder whose outlet is fitted with a filter placed before a die.

The twin-screw mixer comprises two screws arranged side by side which rotate in the same direction.

The charge introduced into the twin-screw mixer is composed of the base polymer, available from silicon product manufacturers, a powdered charge such as silica and silane compounds.

The compound leaves the twin-screw mixer at a temperature of between 150 and 250°C and is introduced directly into the single-screw extruder, passing, at the end, through the filter and the die, from which it exits at a temperature of between 120 and 220°C.

In a further example, it is mentioned that the compound leaves the twin-screw mixer at 231°C and at a pressure of 2 bar; the compound is then conveyed to the filtering zone at a pressure of 70 bar and leaves the die at 170°C.

The description gives no indication as to the addition of vulcanization agents.

The process of US patent 5,409,978 uses two twin-screw mixers for obtaining a silicone rubber compound; the first mixer comprises a pair of screws rotating in the same direction, while in the second the screws rotate in opposite directions. The base polymer, the silica and the silane ingredients are mixed in the first mixer, until a temperature of between 200 and 300°C is reached.

The extrudate is conveyed directly to the second mixer, which it leaves at a temperature of between 150 and 300°C. These temperatures are tolerable since the silane ingredients used contain no sulphur and therefore cannot initiate premature vulcanization.

The cooling can be carried out using, for example, a conveyor belt or an extruder comprising a single screw, with means for controlling the temperature.

The product obtained is formed of a silicone rubber compound which can be converted into a silicone rubber by heating after a vulcanization agent in the form of a peroxide has been added.

An inspection of the prior art shows that full examples of teaching are still not available, or otherwise known, which can be used for providing rapidly implementing continuous processes which involve little or no changing of equipment and contained labour costs, for producing semi-finished products made of reinforced rubber with silica fillers, in particular tread bands, thereby making it possible to achieve a high level of uniformity in the properties and thus performance of the product when in use.

On the one hand, batchwise processes using apparatus known under the name Banbury involve non-continuous processing of the compounds and, although the quality of their products is good, they do not satisfy the demand for speed of processing and lower manufacturing costs, and, on the other hand, continuous processes, as seen, are not suitable for the manufacture of semi-finished products for tyre technology, in particular for the production of tread bands with a high silica content.

The continuous processes referred to earlier in the prior art carry out phases of mixing a base polymer added to reinforcing fillers including silica and silane components in order to obtain a silicone rubber.

It should first of all be pointed out that silicone rubber cannot be used in the manufacture of semi-finished products for tyres, especially tread bands, and furthermore that the high temperatures, of 200°C and over described in the known continuous processes, can be accepted only because the compounds concerned contain silanes free of sulphur atoms. If the compound were to contain silanes with sulphur atoms, as is the case in the process of the present invention, premature vulcanization and, more generally, degradation of the silane would be encountered at the temperatures indicated in the continuous processes of the prior art, resulting in scorching of the compound, the presence of lumps and other impairments.

Thus, although continuous processes can be carried out using machinery which overcomes the non-continuity of processes associated with the use of a Banbury mixer, such as twin-screw mixers and single-screw extruders, they are best for the production of semi-finished products that are different from those required for use in tyres and, if used, they would make tyres produced with this machinery unacceptable.

It should also be observed that there is an ever-increasing need to produce tyres, and thus the related semi-finished products, in particular tread bands, with a very high degree of uniformity in industrial-scale productions since, given current market globalization, all tyres of the same model, identical size and tread design have to maintain, for all potential clients and in all markets, the same levels of quality, which is generally a specific selling point, focusing in particular on resistance to abrasion, road-holding in dry and wet conditions, low resistance to rolling and excellent road handling.

The uniform performance of the tread rubber depends on the presence of uniform properties as regards the physical and chemical parameters of the corresponding compound.

The Applicant has found that of the physical parameters, the crude viscosity, the breaking load and the modulus, measured at 100% and at 300% elongation, determined on the vulcanized compound, are very significant; while of the chemical parameters, the degree of silanization acquires great importance. The Applicant's aim was to achieve high uniformity of properties for the tread bands, with minimal standard deviations between different tyres of the same type.

In other words, if a certain number of tread bands of the same compound are considered and the properties mentioned above measured, a good result would be felt to have been reached if, for each property, essentially 100% of the treads considered had minimal deviations from the average value for this property.

We will return to this point in greater detail and with more in-depth explanations later.

Unfortunately, the known techniques relating to continuous processes are lacking in useful information in terms of how to achieve the abovementioned values of uniformity with minimum standard deviation.

In this sector, the Applicant, starting from the known art relating to the production of compounds for semi-finished products, in particular tread bands, produced non-continuously as described in its Italian patent IT 1 274 257 addressed the technical problem of developing a continuous process which would give very high values of uniformity in the compounds, with standard deviations of the values of the moduli CA1 and CA3 (at 100% and at 300% elongation) from the average value which are less than 0.5 and standard deviations of the values of the viscosity of the crude compound, from the average value of the said viscosity, which are less than 6 and preferably less than 5.5

The Applicant saw intuitively that the problem could be solved by using a process based on the continuous processing of a blend consisting of the base polymer and the various ingredients added in measured amounts and at defined points along a path of mixing and conveying of the blend by alternating phases mainly involving mixing, with a high level of absorption of mechanical work, with phases mainly involving blend advance, with a reduced level of absorption of work, while maintaining the specific value of a few physical parameters, which are taken as characterizing the heat profile of the blend, within a predetermined range by controlling the heat profile of the said blend along at least one defined stretch of the said path along which the blend is mixed and advanced.

Preferably, this control is carried out by determining the value of the said physical parameters at least at predetermined points on the said path.

The temperature and the viscosity were preferentially taken as physical parameters which characterize the abovementioned heat profile.

In one of its aspects, the invention relates to a process for producing a rubber compound, for use in vehicle wheel tyres, whose ingredients include a polymer base containing an unsaturated chain, at least one silica-based reinforcing filler, a silane containing at least one sulphur atom as silica-binding agent and a sulphur-based vulcanizing system, this process comprising the phases of
- providing a path for mixing and advancing the ingredients, said path having an initial stretch, an intermediate stretch and a final stretch, each of said stretches being defined between an inlet section and an outlet section, the outlet section of each stretch essentially matching up with the inlet section of the next stretch;
- feeding said polymer base containing a crosslinkable unsaturated chain, said at least one silica-based reinforcing filler, said silane containing at least one sulphur atom continuously into the initial stretch of the path to form a blend;
- feeding said vulcanizing system continuously into the inlet section of the final stretch, and
- maintaining, in said outlet section of said initial stretch, temperature and viscosity values for the said blend within predetermined ranges by controlling heat profile of said blend inside said initial stretch.

Preferably, this control is carried out by determining the said temperature and viscosity values each in at least one respective first intermediate section, lying between the inlet and outlet sections of the said first stretch, and, even more preferably, in the same first intermediate section A, preferably located at a distance from the inlet section of the said initial stretch which is between 55% and 65% of the distance L which exists between the inlet and outlet sections of the said initial stretch.

Even more preferably, the abovementioned heat profile has a temperature T_{A} between 110 and 120°C and a viscosity η_{A} between 540 and 660 Pa*s at the temperature T_{A} in the said first intermediate section and a temperature T_{C} between 150 and 160°C and a viscosity η_{C} between 300 and 380 Pa*s at the temperature T_{C} in the said outlet section of the said initial stretch.

Preferably, the process of the invention also comprises the phase of cooling the blend in the said intermediate stretch in a manner which is protected from variations in ambient temperature.

Preferably, the abovementioned heat profile is controlled by also determining the said temperature and viscosity values each in at least one respective second intermediate section, lying between the said inlet and outlet sections of the said initial stretch.

More preferably, the said second intermediate sections coincide in a single second intermediate section B, located at a distance from the inlet section of the said initial stretch which is between 35% and 45% of the distance which exists between the said inlet and outlet sections of the said initial stretch: even more preferably, the said heat profile has a temperature T_{B} between 55°C and 65°C and a viscosity η_{B} between 8500 Pa*s and 7000 Pa*s at the temperature T_{B} in the said second intermediate section.

As regards the other points of control, preferably, the said heat profile has a temperature T_{E} between 100 and 110°C and a viscosity η_{E} between 600 and 650 Pa*s at the temperature T_{E} at the inlet section of the said final stretch, and, even more preferably, a temperature T_{F} not above 110°C and a viscosity η_{F} between 550 and 600 Pa*s at the temperature T_{F} in the said outlet section of the said final stretch.

Preferably, the initial stretch of the said path for mixing and advancing the blend is formed by a twin-screw mixer with screws preferably rotating in opposite directions; even more preferably, the spin speed of the said screws is between 45 and 55 revolutions/minute.

Still in accordance with another preferred version, the final stretch of the said path for mixing and advancing the blend is formed by a single-screw extruder; even more preferably, the spin speed of the said screw is between 35 and 45 revolutions/minute.

In a preferred embodiment of the abovementioned process, the throughput of the said blend along the said mixing and advance path is between 200 and 400 kg/hour, preferably with a rate of advance of the said blend in the said initial stretch of between 0.5 and 1.5 cm/sec and with the throughput time in the said mixing and advance path, from the inlet section of the said initial stretch to the outlet section of the said final stretch, at between 5 and 10 minutes.

The process of the present invention runs with low energy consumptic In particular, the power absorbed to mix and advance the said blend along the blend mixing and advance path is, in its whole, less than 0.250 kW/kg and preferably between 0.165 kW/kg and 0.200 kW/kg: even more preferably, the power absorbed in the said initial stretch is at least equal to 75% of the overall power absorbed in the said path.

In any event, the present invention will be understood more clearly with the aid of the description which follows and the appended figures, which are given purely by way of non-limiting examples, in which:
- Figure 1: is a schematic representation of a plant for carrying out the process according to the invention;
- Figure 2: is a first detail of the plant shown in Figure 1;
- Figure 3: is a second detail of the plant shown in Figure 1;
- Figure 4: is a graph plotting variation in the temperatures allowed for plants designed to carry out the process according to the invention; and
- Figure 5: is a graph showing the progress of the silica/silane reaction in a process for manufacturing tread bands.

The process for the continuous production of a compound for tyres filled with a silica reinforcing filler, according to the invention, as already anticipated, consists essentially in mixing the ingredients of the compound along a path for mixing and advancing the blend, which provides for at least three successive stretches, namely an initial stretch, an intermediate stretch and a final stretch, which differ from each other in the type and amount of mechanical work carried out on the blend as it passes along the corresponding stretch: the heat profile of the blend is controlled along the entire length of the path by means of temperature and viscosity values which are determined at defined points on the path, the said heat profile preferably being assigned a course which first increases, up to a maximum temperature for the blend, preferably not above 160°C, and then decreases, and, even more preferably, is free of inversions of behaviour in each of the two branches, of increase and decrease respectively.

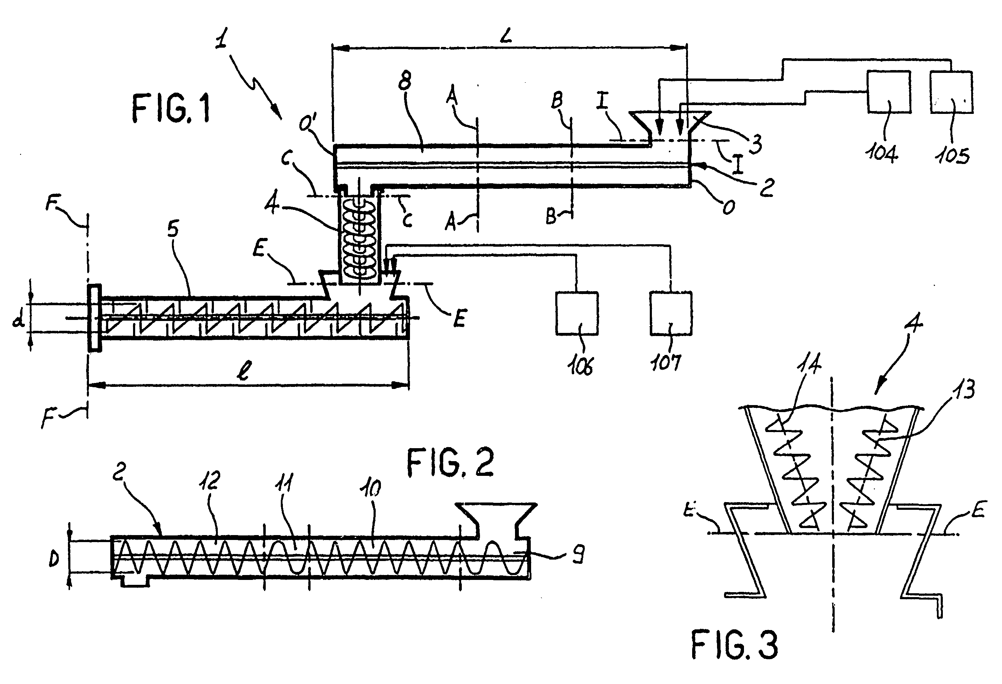

The abovementioned process is preferably carried out using plant 1 in Figure 1.

In the example described, plant 1 is designed for the continuous production of compounds for tread bands or, alternatively, of tread bands for tyres, formed of a rubber compound mainly comprising a polymer base containing an unsaturated chain which can be crosslinked with sulphur-based systems, at least one silica-based reinforcing filler, a silane-based binding agent containing at least one sulphur atom and a vulcanizing system.

Among polymer bases useful for the purposes of the invention, polymers or copolymers containing an unsaturated chain obtained by polymerization of conjugated dienes and/or vinyl, aliphatic or aromatic monomers are mentioned.

The base polymers can be formed of natural rubber, poly(1,4-cis-butadiene), polychloroprene, poly(1,4-cis-isoprene), isoprene/isobutene (optionally halogenated), butadiene/acrylonitrile or styrene/butadiene copolymers, and styrene/butadiene/isoprene terpolymers, which are obtained either in solution or in emulsion, and ethylene/propylene/diene terpolymers.

Plant 1 essentially comprises a twin-screw mixer 2 which is continuously fed from a charging hopper 3 with polymer material and various ingredients arriving from appropriate tanks 104 and 105, a device 4 for transferring and cooling the blend and a single-screw extruder 5 which is fed continuously and directly, from its charging hopper, with the blend from the device 4 as well as, separately, with ingredients for the vulcanization system from tanks 106 and 107.

More specifically, the twin-screw mixer 2 consists of an extruder of axial length "L" measured between a first end O and a second end O', in whose chamber 8 are located two screws arranged side by side, which preferably rotate in opposite directions to each other; these screws are provided along their longitudinal length with an appropriately shaped flight in order to mix and transport the blend inside the body of the extruder. The mixer forms the initial stretch of the said path for mixing and advancing the blend: the aperture of the loading hopper 3 on the body of the extruder corresponds essentially to the inlet section I-I of the said initial stretch, and the aperture for unloading the material into the transfer device 4 corresponds substantially to the outlet section C-C of the said stretch. In accordance with the invention, this type of mixer preferably has a ratio between the diameter "D" of each screw and the length "L" of the body of the extruder, which has a value of between 8 and 15. In the plant described and shown herein, the length "L" of the mixer 2 is 1300 mm and the ratio L/D is equal to 10.

The mixer 2 can comprise many different embodiments, a number of which can be found in machines already commercially available, for example in the machines and equipment from the companies Farrel, Werner & Pfleiderer, and Pomini, respectively.

At any event, irrespective of the profile of the screws, the sizes of the chamber and the cooling system provided, the mixer, in accordance with the invention, has to enable processing of the compound which reaches and maintains temperature and viscosity values along the chamber within a predetermined range: more particularly, the heat profile of the blend undergoing processing is controlled on the basis of readings of the temperature and viscosity values each at at least two points along the mixer, and preferably at at least three points.

While it is possible to measure the said temperature and viscosity values separately from each other, at separate points on the path, the Applicant prefers to carry out these measurements on the same sections, preferably on the outlet section C-C and on the section labelled "A-A" in Figure 1, and, even more preferably, also at a further third point, that is to say on the section labelled "B-B" again in Figure 1.

More specifically, section A-A is preferably located at a distance from the first end O which is between 55% and 65% of L; in this section, the temperature T_{A} of the blend is preferably between 110 and 120°C and the corresponding viscosity η_{A} between 540 and 660 Pa*s (Pascal seconds).

On the outlet section C-C, the temperature value T_{C} and viscosity value η_{C} are preferably between 150 and 160°C and between 300 and 380 Pa*s, respectively.

Preferably, as stated, the heat profile of the blend in mixer 2 is controlled at at least a further third point, that is to say on section B-B.

More precisely, section B-B is located at a distance from the first end O which is preferably between 35% and 45% of L; in this section, the temperature T_{B} of the blend is preferably between 55 and 65°C and the corresponding viscosity η_{B} between 8500 and 7000 Pa*s.

The temperatures can conveniently be determined using probes formed from thermocouples made of iron/constantan material of the Standard/Pomini type, which are identified by the commercial reference JXIL.

The viscosities are conveniently measured using the Rheo-Vulkameter instrument from the company Göttfert by extruding the compound through a capillary 1/20 mm in diameter at a pressure of 80 bar for a period of 30 sec. From the volume extruded through the capillary the throughput is measured and, from this value, the viscosity in units of Pa*s is determined.

Preferably, the measurements are taken directly on a sample of compound tapped from a specific aperture in the chamber 8 located at the desired point.

Preferred embodiments of the plant 1 are thus formed by mixers 2 comprising a pair of screws, at least one of which has a profile which differs from one zone to another along the longitudinal length of the chamber 8, that is to say it has a series of successive profiles which alternate from one to another, a few mainly being capable of carrying out intense mechanical processing of the material, (dispersion of the ingredients in the blend although this is not separate from a thrusting action for advance of the blend), and others which are more specifically intended to bring about advance of the blend along the body of the mixer, even though they help to carry out a certain mixing action.

The profiles of the screws have an angle of inclination relative to the longitudinal axis of the screw which is preferably between 10° and 30° in the zones involving intense levels of processing, and between 20° and 40° in the advancing zones.

Preferably, four zones 9, 10, 11, 12 are provided along the body of the mixer (Fig. 2), two mainly for advance and two mainly for mechanical processing; in particular, the second and fourth zones, 10 and 12, from the first end O are adapted for intense mechanical processing.

Preferably, in the second zone 10, the two screws have tangential profiles and, even more preferably, the profiles of the two screws in zone 12 interlock, in order to increase the dispersion of the components in the compound.

In all of these solutions, sections A-A and B-B are located in zones in which the profiles of the screws are particularly suited to intense mechanical processing of the blend.

The temperature and viscosity values of the blend are maintained within the ranges specified above by means of the cooling and regulation devices provided, in a known manner, on the extruders of the plant described.

The reaction of the silane with the silica preferably needs to be at least 85% complete on leaving the mixer. The extent of the reaction is measured by means and methods that are all known and are not included in the present invention.

In accordance with the invention, the intermediate stretch of the path for mixing and advance of the blend is formed by a device 4 for transferring and cooling the blend. This cooling and transfer device is represented in Figure 1 with its longitudinal axis conveniently aligned with the discharge orifice of the mixer 2 and the feed orifice of a single-screw extruder which will be discussed later: however, the said device may be placed in other positions and furthermore its axis may be in various other orientations.

The device 4 according to the invention is used to cool the blend leaving the mixer, bringing it to a temperature below the crosslinking temperature; this is carried out essentially without any input of mechanical work into the blend, apart from the small amount required to transfer the material between the ends of the device, that is to say from the inlet section C-C to the outlet section E-E. It should be noted that in the preferred arrangement illustrated in Figure 1, the outlet section C-C of the mixer 2 essentially matches up with the inlet section C-C of the device 4.

Many different preferred embodiments of the device 4 are possible, all of which provide controlled cooling systems based on the circulation of gaseous or liquid fluids, or both, inside the device, preferably with insulation of the internal space of the device from the external environment and thus from the ambient temperature. One possible embodiment envisages using an Archimedean screw for moving the material, positioned with its vertical axis of rotation perpendicular to the plane of the outlet section of the device: a different version envisages a plurality of pairs of toothed gears whose centres of rotation are arranged on two inclined axes convergent on the outlet section of the device, close to the inlet of the single-screw extruder. In the position of the maximum divergence, the two axes are close to the inlet section of the device, that is to say the outlet section of the twin-screw mixer.

In the first solution, the vertical arrangement of the screw of the device 4 has been chosen in order to assist transfer of the material only, while at the same time cooling it by circulating water inside the Archimedean screw.

In a more preferred solution, represented schematically in Figure 3, the device 4 provides two screws 13, 14, rotating in opposite directions to each other, with axes inclined as indicated above. The material is cooled by circulating water inside the shafts of the pairs of screws.

It should be observed that, irrespective of the embodiment of the device 4, the material exiting the mixer 2 at a maximum temperature of 160°C is cooled to a temperature preferably between 100 and 110°C, while checking that the corresponding viscosity is between 650 and 600 Pa*s, and is introduced continuously into the downstream single-screw extruder, together with the ingredients of the vulcanizing system which need to be dispersed in the blend in order to produce vulcanizable compounds.

Preferably, the material leaving the device 4 is introduced into the single-screw extruder at a temperature of about 100°C.

The final stretch of the path for mixing and advancing the blend, in accordance with the invention, is formed by a single-screw extruder which consists essentially of an extruder of length "1", measured between its two ends, provided with a single screw, of the same length 1 as that of the body of the extruder, this extruder having, along its longitudinal length, an appropriately shaped flight in order to mix and transport the blend inside the said body of the extruder. Usually, the body of the extruder ends with an outlet die which is appropriately shaped for extruding a semi-finished product with the desired right cross-section.

The aperture of the loading hopper on the body of the extruder essentially matches the inlet section E-E of the said final stretch, and the aperture of the outlet die for the exiting material essentially matches the outlet section F-F of the abovementioned stretch. This type of mixer, according to the invention, has a ratio - between the diameter "d" of the screw and the length "1" of the body of the extruder - of between 6 and 12.

In the plant described and illustrated in Figure 1, the length "1" of the single-screw extruder 5 is 900 mm and the ratio l/d is equal to 10. It should also be noted that in the arrangement illustrated in the figure, the inlet section E-E of the extruder 5 essentially matches the outlet section E-E of the device 4.

The single-screw extruder can be of the type known to skilled people by the name "Pin Convert" available from many companies including, for example, the company "Berstoff" and the company "Krupp Machinentechnik".

Preferably, the temperature value T_{F} and the viscosity value η_{F} on the outlet section F-F of the extruder 5 are, respectively, between 100 and 110°C and between 550 and 600 Pa*s, and preferably not higher than the corresponding values of the inlet section.

In the plant which is here described, the outlet die of the extruder 5 has dimensions such as to extrude continuously a sheet of compound 300 to 350 mm in width and 6 to 8 mm in thickness, or alternatively a strip of compound shaped on its cross-section to the size of a tread band of equal volume.

A practical embodiment of the process of the invention for the continuous production of a tread rubber will now be described.

A base polymer which can be crosslinked with sulphur, formed of styrene butadiene rubber (SBR), reinforcing fillers including silica, a silica-binding agent consisting of a silane containing at least one sulphur atom, various other ingredients, except for the vulcanization system, and other processing ingredients were loaded together into the hopper 3. To facilitate loading of the polymer and the reinforcing fillers, it may be convenient to use a master batch (with carbon black or with silica), that is to say pre-mixed blends of polymer and reinforcing filler.

More particularly, the ingredients of the blend introduced via the hopper corresponded to the following parts by weight relative to 100 parts by weight of the polymer base:

| | |
|---|---|
| Polymer base, SBR rubber | 100 |
| N115-type carbon black (Cabot Corporation) | 30 |
| VN3 silica | 35 |
| Extender oil | 1.5 |
| Silane Si 69 | 3.5 |
| Coumarone resin | 7.5 |
| Zinc oxide | 2.5 |
| Stearic acid | 2 |
| Anti-ageing agent 6PPD (Santoflex 13) | 1.5 |
| Anti-fatigue agent TMQ (Vulcanox) | 1.5 |

The amount of silica can range from 10 to 90 parts by weight per 100 parts by weight of polymer base, with the silane in an amount of between 4 and 15 parts by weight per 100 parts by weight of silica, and preferably between 8 and 10 parts by weight per 100 parts by weight of silica.

The silica had a surface area, measured according to the BET method, equal to 175 m²/g; preferably, the surface area should be between 100 and 300 m²/g. Specifically, it was a VN3-type silica sold by Degussa.

The silica-binding agents are silanes and the following can be used in particular:
Bis(2-triethoxysilylpropyl)tetrasulphide,
Bis(3-trimethoxysilylpropyl)tetrasulphide,
Bis(2-trimethoxysilylethyl)tetrasulphide.

Preferably, a silane sold by Degussa, known under the commercial reference Si 69 [Bis(3-triethoxysilylpropyl)tetrasulphane] was used.

The ingredients introduced into the hopper 3 are delivered into the first zone 9 of the body of the extruder, where they undergo premixing with the aid of the pair of screws rotated at an angular velocity of between 45 and 55 rev/min; this premixing gives rise to a blend which is advanced along the body of the extruder.

In particular, the chemical reaction between the silica and the silane is initiated, and this reaction then proceeds gradually throughout the production cycle.

The blend now flows into the second zone 10: the mechanical processing of the material in the abovesaid zone is particularly intensive, so as to obtain a high level of dispersion of the silica and of the other ingredients in the base polymer.

In the section B-B of the second zone 10, the blend reaches a temperature T_{B} of about 55°C and a viscosity η_{B} with a value of about 8000 Pa*s.

The subsequent third zone 11 mainly furthers the advance of the material towards the final zone 12 where the material arrives at section A-A with a temperature T_{A} of about 120° and a viscosity η_{A} of about 600 Pa*s.

The final zone 12 is again a zone in which intensive mechanical processing takes place in order to maximize dispersion of the silica and the homogenization of the blend.

The blend in the outlet section C-C has a temperature T_{C} of not less than 150°C and not more than 160°C; the viscosity η_{C} is 340 Pa*s with variations of plus or minus 10% of this value as the temperature varies within the said range.

With the formula indicated and the machinery properties specified above, the throughput of mixer 2 can be between 200 and 400 kg/h and the duration of the processing of the blend can range from 2 to 3 minutes with the compound advancing at a speed of between 0.7 and 1.1 cm/sec.

The blend leaving the mixer is conveyed directly and without interruption into the cooling and transfer device 4, in which it is cooled, in a manner which is entirely insensitive to variations in the external ambient temperature, arriving at the loading hopper of the single-screw extruder 5 at a temperature of about 100°C with a viscosity of about 600 Pa*s. The residence time in the cooling device is between 2 and 3 minutes.

Other ingredients can be introduced into the hopper of the extruder 5 but, in particular, the ingredients of the vulcanizing system are introduced.

More specifically, the other ingredients conveyed into the hopper included those indicated below (vulcanization accelerators) with their respective parts by weight per 100 parts by weight of the base polymer:

| | |
|---|---|
| Diphenylguanidine (DPG 80) | 1.25 |
| Benzothiazylsulphenamide (TBBS) | 1.5 |
| Sulphur | 1 |
| Cyclohexylthiophthalimide | 0.2 |

In the extruder 5, the blend is advanced and subjected to reciprocal mixing by the rotation of the relevant screw by a motor unit (not illustrated) at an angular velocity of between 35 and 45 rev/min. The processing time is between 2 and 3 minutes. The mechanical processing of the material is substantially less than that carried out in the mixer 2.

One of the fundamental aspects of the process according to the invention is the dispersion of the vulcanizing agent by means of a single-screw extruder, at essentially constant temperature. The dispersion of the vulcanizing system is effected with moderate mixing without causing large increases in temperature, which might entail risks of premature crosslinking.

The single-screw extruder is controlled such that the mechanical processing is not intensive and does not cause inversion of the heat profile of the blend, whose temperature indeed remains essentially constant in the range 100-110°C, while the viscosity falls to a value essentially of around 500 Pa*s.

The single-screw extruder 5 continuously extrudes an extrudate of the compound which is cooled to temperatures below 30°C and collected, for example, in the form of sheets in overlapping loops in a suitable container (not illustrated), after which they are then processed in another device in order to obtain a semi-finished product with a shape corresponding to that of the tread band desired for the manufacture of a specific model of tyre.

In another preferred embodiment, the single-screw extruder is provided with an appropriately shaped outlet die in order to directly extrude a strip of unlimited length, corresponding to a continuous length of tread band.

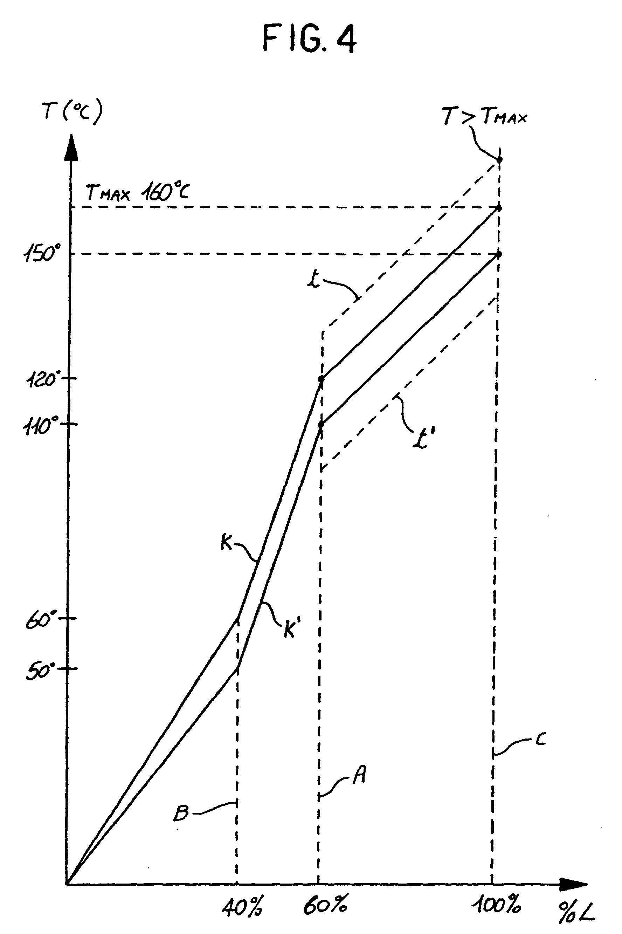

For the purposes of making the invention clearer, Figure 4 shows a diagram, on the X-axis of which are given, in percentage values relative to the length L, the distances of the sections B-B, A-A, C-C from the first end O of the mixer 2, and, on the Y-axis, the corresponding temperatures in these sections.

As has already been stated, irrespective of the embodiment of the mixer, the fact that phases of advance and of mechanical processing of the compound are carried out so as to develop a blend heat profile characterized by a predetermined temperature and viscosity gradient for the material constitutes one of the most important characteristics of the process of the invention.

The diagram in Figure 4 shows two lines, K and K' respectively, qualitatively delimiting the maximum and minimum values of the range within which the temperature variations stipulated by the process according to the invention have to be maintained.

In other words, the blend generated from the material introduced into the hopper 3 can adopt, in the mixer 2, temperature values along the two lines K and K' as well as inside these lines.

The process according to the invention preferably envisages preventing section A-A from reaching a temperature above that delimited by the line K and below that delimited by the line K'. The reason for this is that if the process of mechanically processing the compound were to allow temperatures above the value defined by the line K, there would be a variation in the temperature between sections A-A and C-C along the dashed line t, thereby causing the section C-C to reach a value above 160°C and running the risk of precrosslinking of the compound taking place.

Thus, if the process were to allow section A-A to reach temperatures below the value defined by the line K', the temperatures between sections A-A and C-C would still proceed along the dashed line t', with section C-C reaching a temperature value below 150°C and running the risk of the reaction between the silica and the silane being incomplete.

In this respect, it is considered that a possible reason for the improvements obtained in the compound of the invention might result from the way in which, in the process according to the invention, the chemical reaction between the silica and the silane takes place.

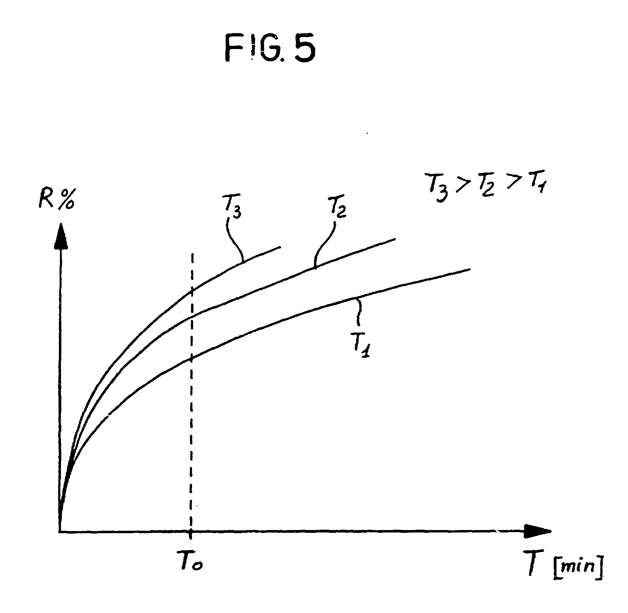

It has been found that the degree of silanization can be represented, at least to a certain approximation and for qualitative purposes, by the graph in Figure 5, in which the y-axis indicates the degree of silanization R expressed in percentage values, and the x-axis indicates the time, expressed in minutes, during which the reaction takes place.

As can be seen by studying the graph, the reaction, for an equal temperature T, shows a rapid initial increase in the silanization before tailing off to an increasing degree of silanization but over a longer period.

Moreover, it is seen that, for an equal reaction time t, the degree of silanization increases as the temperature increases (T₁ < T₂ <T₃).

Thus, the reaction between the silane and the silica depends on the temperature and on how long this temperature acts and, in practice, involves the entire manufacturing cycle of the compound, from the phase of initial mixing of the ingredients to completion with dispersion of the vulcanizing system in the blend.

In the known process, the periodic phases of cooling of the blend which occur at intervals in the compound preparation cycle result in a non-uniform development of the degree of silanization, which has a negative influence on the homogeneity properties of the final semi-finished product.

Moreover, in the case where the process were to allow higher viscosity values in section A-A than indicated above, there would be a risk of maintaining an excessive viscosity value at the end, which is an indication of insufficient dispersion of the silica in the polymer mass.

If on the other hand the process were to allow viscosity values lower than those already indicated in section A-A, there would be a risk of the material reaching an undesired, excessive level of fluidity in section C-C, with consequent excessive stickiness causing many problems in the subsequent stages of manufacture of the tyre.

As can be seen, the area enclosed by the two lines K and K' is fairly limited, as a result of which the temperature variations allowed by the process are small and this is reflected in high uniformity of the properties of the final product, as will become more apparent in the following tests.

Semi-finished products obtained by the known batchwise process using Banbury-type mixers, as described in the abovementioned patent application, were compared with semi-finished products obtained by the process according to the invention.

The comparative semi-finished products, of the type designed to form tread bands, had the same chemical composition corresponding to that described in the present text.

**Table 1**

| Compound produced according to the invention | | | | Compound produced in a known manner | | | |
|---|---|---|---|---|---|---|---|
| Viscosity | CA1 | CA3 | IRHD | Viscosity | CA1 | CA3 | IRHD |
| 82 | 2.25 | 8.22 | 75.9 | 72.8 | 2.07 | 8.5 | 71.4 |
| 81 | 2.33 | 8.35 | 76.9 | 77.4 | 2.6 | 10.2 | 77.5 |
| 81 | 2.1 | 8.56 | 75.4 | 74.3 | 2.3 | 9.4 | 75.7 |
| 82 | 2.42 | 8.42 | 78.3 | 72.1 | 2.51 | 9.8 | 75.8 |
| 82 | 2.19 | 8.34 | 78.7 | 73 | 2.43 | 10 | 75.8 |
| 80 | 2.03 | 8.5 | 74.1 | 70.4 | 2.4 | 9.4 | 75 |
| 79 | 2.19 | 8.45 | 75.2 | 71.7 | 2.47 | 10.3 | 74.5 |
| 78 | 2.12 | 8.54 | 74.9 | 72.3 | 2.59 | 9.7 | 74.5 |
| 78 | 2.25 | 8.55 | 76.5 | 72.7 | 2.61 | 9.2 | 76 |

| Average value x | | | | | | | |
|---|---|---|---|---|---|---|---|
| 80.33 | 2.21 | 8.44 | 76.22 | 72.97 | 2.44 | 9.61 | 75.33 |

| Standard Deviation 1σ | | | | | | | |
|---|---|---|---|---|---|---|---|
| 1.66 | 0.12 | 0.12 | 1.55 | 1.97 | 0.17 | 0.56 | 1.67 |

| Percentage variations in the 1σ values for the compounds of the invention relative to the known values: | | | |
|---|---|---|---|
| Viscosity | CA1 | CA3 | IRHD |
| +15.7% | +29.4% | +78.5% | +7.1% |

The above table collates the results of the comparative tests on the following properties:
- Viscosity of the crude semi-finished product after addition of the vulcanizing system to the compound; the measurement is made in Mooney units according to ISO standard 289-1 at a temperature of 100°C, using the Monsanto MV 2000 E instrument according to procedure ML (1+4);
- Modulus values at 100% (CA1) and at 300% (CA3) elongation on test pieces of semi-finished products after vulcanization; the test was carried out according to ISO standard 37, by measuring the force, in MPa (MegaPascals) required to produce the abovementioned elongations on the test pieces;
- Hardness on test pieces of vulcanized semi-finished products; the hardness was measured in IRHD units, working according to ISO standard 48.

As can be shown directly from Table 1, the compounds produced by the process according to the invention are considerably more uniform than those produced by known processes, as demonstrated by the lower standard deviation of the values of the properties examined.

It is known that, according to the statistical law of Standard Deviation, given a certain number of values distributed around an average value, the standard deviations 1σ 2σ 3σ indicate, by their deviation from the average value, the size of the intervals in which 68.26%, 95.44% and 99.73% respectively of the values of the abovementioned quantity are found.

The Theory of Standard Deviation makes it possible to calculate easily, using a well-known mathematical formula, the standard deviation values for a set of given values. It is clear that a wide scatter of values around the average value will give rise to very large standard deviations, whereas a high concentration of values around the abovementioned average value will give rise to very small standard deviations.

The improvements obtained in the properties of the modulus at 100% and at 300% elongation can be seen particularly clearly in the abovementioned table.

For example, if we consider the modulus CA3 for the compounds of the invention, given the value of 1σ reported in the table, equal to 0.12, by the statistical law of normal distribution, 99.73% of the values of the whole range of test pieces will be within an interval equal to ± 3σ, that is to say equal to ± 0.36 (0.12 x 3). When the same calculation is carried out for the values of the CA3 modulus for the compounds produced by the known method, a corresponding value for the interval equal to ± 1.68, that is to say 0.56 x 3, is found.

When the calculation is repeated for CA1 modulus values of the comparative compounds, a value of ± 0.36 is again found, compared with a value of ± 0.51.

Similar results are found when extending the examination of the values to the properties of viscosity and hardness: in particular, it can be seen that virtually 100% (99.73%) of the test pieces of the crude compound produced according to the invention have a viscosity value within ± 3σ range of less than ± 5 (1.66 x 3 = 4.98) as compared with the corresponding range, for the compound produced in a known manner, of considerably more than ± 5 (1.97 x 3 = 5.91).

The invention furthermore has the advantage of a process which is carried out with substantially less energy consumption than the known process.

On this subject, Table 2 below compares, on the left, the energy consumption of the known process with, on the right, that of the process according to the invention.

The compound for both processes is that already stated above.

The known process is carried out according to the stages of the Applicant's patent application, which has already been mentioned several times in this description.

The energy consumption figures were obtained by measuring the power absorbed by the motors for the various phases of mechanical processing of the compound. The unit of measurement is the kW/kg.

**Table 2**

| Known process, batchwise | | Continuous process according to the invention | |
|---|---|---|---|
| Phase 1 | 0.115 kW/kg | Twin-screw mixer | 0.150 kW/kg |
| Phase 2 | 0.080 kW/kg | Single-screw | 0.030 kW/kg |
| | | extruder | |
| Final phase | 0.065 kW/kg | Transfer device | ---- |

The consumption of the transfer and cooling device 4 is not given in the table since it has negligible influence on the sum total of the power absorbed by the mixer and by the extruder.

The total consumption of the known process is 0.260 kW/kg, compared with a consumption of 0.180 kW/kg for the process according to the invention.

It may be that one of the reasons for the higher energy consumption of the known process is the stages needed to return the temperature of the compound, after each cooling, from room temperature to a temperature of about 100°C.

The process according to the invention avoids these energy consumptions since the material leaving the mixer 2 is conveyed directly to the cooling device 4 and, from the latter, is introduced directly into the single-screw extruder 5 at a temperature of about 100°C. Further reduction of the energy consumption then depends on the overall mechanical processing of the compound being less than that which takes place in the known process.

The lower energy consumption is demonstrated by the viscosity value, measured using the Monsanto MV 2000 E instrument, according to the data reported in Table 1.

As may be seen, the viscosity of the extrudate leaving the single-screw extruder is about 10% higher than that of the final product of the known process: this unexpected result indicates that the lesser mechanical processing imparted to the compound by the process according to the invention has given rise to less breaking of the molecular chains of the base polymer but nevertheless achieving essentially the same level of dispersion of the silica and of silanization.

In other words, the processes of the prior art impart excessive mechanical processing to the compound, which, instead of increasing the degree of dispersion of the silica and of silanization of the compound, degrades the structural properties of the polymer and has a consequent negative impact on the level of quality of the final product.

This result is, indeed, advantageously demonstrated as regards the performance of the tyres when in use: in particular, tyres having the known convential structure described earlier, provided with tread bands produced by the process according to the invention and by the compound of the abovementioned formula, characterized by a crude viscosity, measured at 100°C, of greater than 76 ML (Mooney) and preferably between 78 and 82 ML (Mooney), have shown superior performance levels, particularly as far as regards the greater resistance to abrasion and the smaller resistance to rolling than those of the comparative tyres, which are entirely identical to the prototype tyres except that the tread band, of the same compound, produced according to the known batchwise method, had a crude viscosity, measured at 100°C, equal to or less than 73 ML (Mooney).

## Claims

1. Process for producing a rubber compound, for use in vehicle wheel tyres, whose ingredients include a polymer base containing a crosslinkable unsaturated chain, at least one silica-based reinforcing filler, a silane containing at least one sulphur atom as silica-binding agent, and a sulphur-based vulcanizing system, this process comprising the phases of:
- providing a path for mixing and advancing the ingredients, said path having an initial stretch, an intermediate stretch and a final stretch, each of said stretches being defined between an inlet section and an outlet section, the outlet section of each stretch essentially matching up with the inlet section of the next stretch;
- feeding said polymer base containing a crosslinkable unsaturated chain, said at least one silica-based reinforcing filler, said silane containing at least one sulphur atom continuously into the initial stretch of the path to form a blend;
- feeding said vulcanizing system continuously into the inlet section of the final stretch, and
- maintaining, in said outlet section of said initial stretch, temperature and viscosity values for the said blend within predetermined ranges by controlling heat profile of said blend inside said initial stretch.

2. Process according to Claim 1, **characterized in that** the heat profile of the blend is controlled by determining said temperature and viscosity values each in at least one respective first intermediate section, lying between said inlet and outlet sections of said initial stretch.

3. Process according to Claim 2, **characterized in that** said al least one first intermediate section coincides in a same section A, located at a distance from the inlet section of said initial stretch which is between 55% and 65% of the distance L between said inlet and outlet sections of said initial stretch.

4. Process according to Claim 1, **characterized in that** said heat profile has a temperature T_{A} between 110 and 120°C and a viscosity η_{A} between 540 and 660 Pa*s at the temperature T_{A} in said first intermediate section and a temperature T_{C} between 150 and 160°C and a viscosity η_{C} between 300 and 380 Pa*s at the temperature T_{C} in said outlet section of said initial stretch.

5. Process according to Claim 1, **characterized in that** said blend is cooled in said intermediate stretch in a manner which is protected from variations in ambient temperature.

6. Process according to Claim 1, **characterized in that** said heat profile of the blend is controlled by determining said temperature and viscosity values each in at least one respective second intermediate section, lying between said inlet and outlet sections of said initial stretch.

7. Process according to Claim 6, **characterized in that** said at least one second intermediate section coincides in a same second intermediate section B, located at a distance from the inlet section of said initial stretch which is between 35% and 45% of the distance L which exists between said inlet and outlet sections of said initial stretch.

8. Process according to Claim 7, **characterized in that** said heat profile has a temperature T_{B} between 55°C and 65°C and a viscosity η_{B} between 8500 Pa*s and 7000 Pa*s at the temperature T_{B} in said second intermediate section.

9. Process according to Claim 1, **characterized in that** said heat profile has a temperature T_{E} between 100 and 110°C and a viscosity η_{E} between 600 and 650 Pa*s at the temperature T_{E} in said inlet section of said final stretch.

10. Process according to Claim 1, **characterized in that** said heat profile has a temperature T_{F} not above 110°C and a viscosity η_{F} between 550 and 600 Pa*s at the temperature T_{F} in said outlet section of said final stretch.

11. Process according to Claim 1, **characterized in that** from 10 to 80 parts by weight of said silica-based reinforcing filler per 100 parts by weight of said polymer base are fed continuously into the inlet section of said initial stretch.

12. Process according to Claim 1, **characterized in that** from 4 to 15 parts by weight of said binding agent per 100 parts by weight of said silica-based reinforcing filler are fed continuously into the inlet section of said initial stretch.

13. Process according to Claim 1, **characterized in that** said binding agent comprises four sulphur atoms.

14. Process according to Claim 1, **characterized in that** said binding agent is bis(3-triethoxysilylpropyl)tetrasulphane.

15. Process according to Claim 1, **characterized in that** said initial stretch of said path is formed by a twin-screw mixer.

16. Process according to Claim 15, **characterized in that** screws rotate in opposite directions.

17. Process according to Claim 15, **characterized in that** spin speed of each screw is between 45 and 55 revolutions/minute.

18. Process according to Claim 1, **characterized in that** said final stretch of said path is formed by a single-screw extruder.

19. Process according to Claim 18, **characterized in that** the spin speed of the screw is between 35 and 45 revolutions/minute.

20. Process according to Claim 1, **characterized in that** rate of advance of the said blend in said initial stretch is between 0.5 and 1.5 cm/sec.

21. Process according to Claim 1, **characterized in that** throughput of said blend along the said path is between 200 and 400 kg/hour.

22. Process according to Claim 1, **characterized in that** throughput time in said path, from the inlet section of said initial stretch to the outlet section of said final stretch, is between 5 and 10 minutes.

23. Process according to Claim 1, **characterized in that** power absorbed to mix and advance said blend along said path is, in its whole, less than 0.250 kW/kg.

24. Process according to Claim 23, **characterized in that** said power is between 0.165 kW/kg and 0.2 kW/kg.

25. Process according to Claim 23, **characterized in that** power absorbed in said initial stretch is at least equal to 75% of the overall power absorbed in said path.

## Patentansprüche

1. Verfahren zur Erzeugung einer Kautschukmasse zur Verwendung in einem Fahrzeugradreifen, zu deren Bestandteilen eine eine vemetzbare ungesättigte Kette enthaltende Polymerbasis, wenigstens ein verstärkender Füllstoff auf Siliziumdioxidbasis, ein wenigstens ein Schwefelatom als Siliziumdioxid bindendes Mittel enthaltendes Silan und ein vulkanisierendes System auf Schwefelbasis gehören, wobei das Verfahren die Phasen aufweist:
- Bereitstellen eines Wegs zum Mischen und Vorwärtsbewegen der Bestandteile der eine Anfangsstrecke, eine Zwischenstrecke und eine Endstrecke hat, wobei jede der Strecken zwischen einem Einlassabschnitt und einem Auslassabschnitt gebildet wird und der Auslassabschnitt jeder Strecke im wesentlichen mit dem Einlassabschnitt der nächsten Strecke zusammenpasst,
- kontinuierliches Zuführen der eine vernetzbare ungesättigte Kette enthaltenden Polymerbasis, des wenigstens einen verstärkenden Füllstoffs auf Siliziumdioxidbasis und des wenigstens ein Schwefelatom enthaltenden Silans in die Anfangsstrecke des Wegs zur Bildung einer Mischung,
- kontinuierliches Zuführen des vulkanisierenden Systems in den Einlassabschnitt der Endstrecke und
- Aufrechterhalten in dem Auslassabschnitt der Anfangsstrecke von Temperatur- und Viskositätswerten für die Mischung innerhalb vorgegebener Bereiche durch Steuern des Wärmeprofils der Mischung innerhalb der Anfangsstrecke.

2. Verfahren nach Anspruch 1, **dadurch gekennzeichnet, dass** das Wärmeprofil der Mischung dadurch gesteuert wird, dass die Temperatur- und Viskositätswerte jeweils in wenigstens einem entsprechenden ersten Zwischenabschnitt bestimmt werden, der zwischen den Einlass- und Auslassabschnitt der Anfangsstrecke liegt.

3. Verfahren nach Anspruch 2, **dadurch gekennzeichnet, dass** der wenigstens eine erste Zwischenabschnitt in einen gleichen Abschnitt A fällt, der sich in einem Abstand von dem Einlassabschnitt der Anfangsstrecke befindet, der zwischen 55 % und 65 % des Abstandes L zwischen dem Einlass- und Auslassabschnitt der Anfangsstrecke liegt.

4. Verfahren nach Anspruch 1, **dadurch gekennzeichnet, dass** das Wärmeprofil eine Temperatur T_{A} zwischen 110 und 120°C und eine Viskosität η_{A} zwischen 540 und 660 Pa*s bei der Temperatur T_{A} in dem ersten Zwischenabschnitt und eine Temperatur T_{C} zwischen 150 und 160°C und eine Viskosität η_{C} zwischen 300 und 380 Pa*s bei der Temperatur T_{C} im Auslassabschnitt der Anfangsstrecke hat.

5. Verfahren nach Anspruch 1, **dadurch gekennzeichnet, dass** die Mischung in dem Zwischenabschnitt auf eine Weise gekühlt wird, die vor Änderungen in Umgebungstemperatur geschützt ist.

6. Verfahren nach Anspruch 1, **dadurch gekennzeichnet, dass** das Wärmeprofil der Mischung dadurch gesteuert wird, dass die Temperatur- und Zähigkeitswerte jeweils in wenigstens einem entsprechenden zweiten Zwischenabschnitt bestimmt werden, der zwischen dem Einlass- und Auslassabschnitt der Anfangsstrecke liegt.

7. Verfahren nach Anspruch 6, **dadurch gekennzeichnet, dass** wenigstens ein zweiter Zwischenabschnitt in den gleichen zweiten Zwischenabschnitt B fällt, der sich in einem Abstand von dem Einlassabschnitt der Anfangsstrecke befindet, der zwischen 35 % und 55 % des Abstands L liegt, der zwischen dem Einlass- und Auslassabschnitt der Anfangsstrecke vorhanden ist.

8. Verfahren nach Anspruch 7, **dadurch gekennzeichnet, dass** das Wärmeprofil eine Temperatur T_{B} zwischen 55°C und 65°C und eine Viskosität η_{B} zwischen 8500 Pa*s und 7000 Pa*s bei der Temperatur T_{B} in dem zweiten Zwischenabschnitt hat.

9. Verfahren nach Anspruch 1, **dadurch gekennzeichnet, dass** das Wärmeprofil eine Temperatur T_{E} zwischen 100 und 110°C und eine Viskosität η_{E} zwischen 600 und 650 Pa*s bei der Temperatur T_{E} in dem Einlassabschnitt der Endstrecke hat.

10. Verfahren nach Anspruch 1, **dadurch gekennzeichnet, dass** das Wärmeprofil eine Temperatur T_{F} nicht über 110°C und eine Viskosität η_{F} zwischen 550 und 600 Pa*s bei der Temperatur T_{F} in dem Auslassabschnitt der Endstrecke hat.

11. Verfahren nach Anspruch 1, **dadurch gekennzeichnet, dass** von 10 bis 80 Gewichtsteilen von verstärkendem Füllstoff auf Siliziumdioxidbasis pro Hundert Gewichtsteilen der Polymerbasis in den Einlassabschnitt der Anfangsstrecke kontinuierlich zugeführt werden.

12. Verfahren nach Anspruch 1, **dadurch gekennzeichnet, dass** von 4 bis 15 Gewichtsteile des Bindemittels pro Hundert Gewichtsteile des verstärkenden Füllstoffs auf Siliziumdioxidbasis in den Einlassabschnitt der Anfangsstrecke kontinuierlich zugeführt werden.

13. Verfahren nach Anspruch 1, **dadurch gekennzeichnet, dass** das Bindemittel vier Schwefelatome hat.

14. Verfahren nach Anspruch 1, **dadurch gekennzeichnet, dass** das Bindemittel Bis(3-triethoxysilylpropyl)tetrasulphan ist.

15. Verfahren nach Anspruch 1, **dadurch gekennzeichnet, dass** die Anfangsstrecke des Wegs von einem Doppelschneckenmischer gebildet wird.

16. Verfahren nach Anspruch 15, **dadurch gekennzeichnet, dass** die Schnecken in entgegengesetzten Richtungen drehen.

17. Verfahren nach Anspruch 15, **dadurch gekennzeichnet, dass** die Drehzahl jeder Schnecke zwischen 45 und 55 Umdrehungen pro Minute beträgt.

18. Verfahren nach Anspruch 1, **dadurch gekennzeichnet, dass** die Endstrecke des Wegs von einem Einzelschneckenextruder gebildet wird.

19. Verfahren nach Anspruch 18, **dadurch gekennzeichnet, dass** die Drehzahl der Schnecke zwischen 35 und 45 Umdrehungen pro Minute liegt.

20. Verfahren nach Anspruch 1, **dadurch gekennzeichnet, dass** die Geschwindigkeit der Vorwärtsbewegung der Mischung in der Anfangsstrecke zwischen 0,5 und 1, 5 cm/s liegt.

21. Verfahren nach Anspruch 1, **dadurch gekennzeichnet, dass** der Durchsatz der Mischung längs des Wegs zwischen 200 und 400 kg/h liegt

22. Verfahren nach Anspruch 1, **dadurch gekennzeichnet, dass** die Durchsatzzeit auf dem Weg von dem Einlassabschnitt der Anfangsstrecke zum Auslassabschnitt der Endstrecke zwischen 5 und 10 Minuten liegt.

23. Verfahren nach Anspruch 1, **dadurch gekennzeichnet, dass** die für das Mischen und die Vorwärtsbewegung der Mischung längs des Wegs absorbierte Leistung insgesamt weniger als 0,250 kW/kg beträgt.

24. Verfahren nach Anspruch 23, **dadurch gekennzeichnet, dass** die Leistung zwischen 0,165 kW/kg und 0,2 kW/kg liegt.

25. Verfahren nach Anspruch 23, **dadurch gekennzeichnet, dass** die in der Anfangsstrecke absorbierte Leistung wenigstens gleich 75 % der auf dem Weg absorbierten Gesamtleistung beträgt.

## Revendications

1. Procédé de production d'un compound pour caoutchouc, destiné à être utilisé pour la fabrication de pneus de roues de véhicules, dont les ingrédients comprennent un polymère de base contenant une chaîne insaturée réticulable, au moins une charge de renforcement à base de silice, un silane contenant au moins un atome de soufre en tant qu'agent de liaison de la silice, et un système de vulcanisation à base de soufre, ledit procédé comprenant les étapes consistant à :
- constituer un cheminement pour le mélange et la progression des ingrédients, ledit cheminement ayant une zone allongée initiale, une zone allongée intermédiaire et une zone allongée finale, chacune desdites zones allongées étant délimitée par une section d'entrée et une section de sortie, la section de sortie d'une zone allongée s'adaptant essentiellement à la section d'entrée de la zone allongée suivante,
- introduire de manière continue ledit polymère de base contenant une chaîne insaturée réticulable, ladite au moins une charge de renforcement à base de silice, et ledit silane contenant au moins un atome de soufre dans la zone allongée initiale du cheminement pour former un mélange,
- introduire de manière continue ledit système de vulcanisation dans la section d'entrée de la zone allongée finale, et
- maintenir dans ladite section de sortie de ladite zone allongée initiale, des valeurs de température et de viscosité pour ledit mélange comprises dans des intervalles fixés à l'avance, en réglant le profil thermique dudit mélange à l'intérieur de ladite zone allongée initiale.

2. Procédé selon la revendication 1, **caractérisé en ce qu'**on règle le profil thermique dudit mélange en déterminant lesdites valeurs de température et de viscosité, chacune dans au moins une première section intermédiaire correspondante, située entre ladite section d'entrée et ladite section de sortie de ladite zone allongée initiale.

3. Procédé selon la revendication 2, **caractérisé en ce que** ladite au moins une première section intermédiaire coïncide dans chaque cas avec une même section A, située à une distance de la section d'entrée de ladite zone allongée initiale qui est comprise entre 55% et 65% de la distance L entre ladite section d'entrée et ladite section de sortie de ladite zone allongée initiale.

4. Procédé selon la revendication 1, **caractérisé en ce que** ledit profil thermique correspond à une température T_{A} comprise entre 110 et 120°C et une viscosité η_{A} comprise entre 540 et 660 Pa.s à la température T_{A}, dans ladite première section intermédiaire, et à une température T_{C} comprise entre 150 et 160°C et une viscosité η_{C} comprise entre 300 et 380 Pa.s à la température T_{C}, dans ladite section de sortie de ladite zone allongée initiale.

5. Procédé selon la revendication 1, **caractérisé en ce qu'**on refroidit ledit mélange dans ladite zone allongée intermédiaire d'une manière qui est à l'abri des variations de la température ambiante.

6. Procédé selon la revendication 1, **caractérisé en ce qu'**on règle ledit profil thermique du mélange en déterminant lesdites valeurs de température et de viscosité, chacune dans au moins une seconde section intermédiaire correspondante, située entre ladite section d'entrée et ladite section de sortie de ladite zone allongée initiale.

7. Procédé selon la revendication 6, **caractérisé en ce que** ladite au moins une seconde section intermédiaire coïncide dans chaque cas avec une même seconde section intermédiaire B, située à une distance de la section d'entrée de ladite zone allongée initiale, qui est comprise entre 35% et 45% de la distance L qui existe entre ladite section d'entrée et ladite section de sortie de ladite zone allongée initiale.

8. Procédé selon la revendication 7, **caractérisé en ce que** ledit profil thermique correspond à une température T_{B} comprise entre 55°C et 65°C et une viscosité η_{B} comprise entre 8500 Pa.s et 7000 Pa.s à la température T_{B}, dans ladite seconde section intermédiaire.

9. Procédé selon la revendication 1, **caractérisé en ce que** ledit profil thermique correspond à une température T_{E} comprise entre 100 et 110°C et une viscosité η_{E} comprise entre 600 et 650 Pa.s à la température T_{E}, dans ladite section d'entrée de ladite zone allongée finale.

10. Procédé selon la revendication 1, **caractérisé en ce que** ledit profil thermique correspond à une température T_{F} ne dépassant pas 110°C et une viscosité η_{F} comprise entre 550 et 600 Pa.s à la température T_{F}, dans ladite section de sortie de ladite zone allongée finale.

11. Procédé selon la revendication 1, **caractérisé en ce qu'**on introduit de manière continue dans la section d'entrée de ladite zone allongée initiale 10 à 80 parties en poids de ladite charge de renforcement à base de silice pour 100 parties en poids dudit polymère de base.

12. Procédé selon la revendication 1, **caractérisé en ce qu'**on introduit de manière continue dans la section d'entrée de ladite zone allongée initiale 4 à 15 parties en poids dudit agent de liaison pour 100 parties en poids de ladite charge de renforcement à base de silice.

13. Procédé selon la revendication 1, **caractérisé en ce que** ledit agent de liaison contient quatre atomes de soufre.

14. Procédé selon la revendication 1, **caractérisé en ce que** ledit agent de liaison est le bis(3-triéthoxysilylpropyl)tétrasulfane.

15. Procédé selon la revendication 1, **caractérisé en ce que** ladite zone allongée initiale dudit cheminement est formée par un mélangeur à deux vis.

16. Procédé selon la revendication 15, **caractérisé en ce que** les vis tournent dans des sens opposés.

17. Procédé selon la revendication 15, **caractérisé en ce que** la vitesse de rotation de chaque vis est comprise entre 45 et 55 tours/minute.

18. Procédé selon la revendication 1, **caractérisé en ce que** ladite zone allongée finale dudit cheminement est formée par une extrudeuse à vis unique.

19. Procédé selon la revendication 18, **caractérisé en ce que** la vitesse de rotation de la vis est comprise entre 35 et 45 tours/minute.

20. Procédé selon la revendication 1, **caractérisé en ce que** la vitesse de progression dudit mélange dans ladite zone allongée initiale est comprise entre 0,5 et 1,5 cm/seconde.

21. Procédé selon la revendication 1, **caractérisé en ce que** le débit dudit mélange le long dudit cheminement est compris entre 200 et 400 kg/heure.

22. Procédé selon la revendication 1, **caractérisé en ce que** le temps de traversée dudit cheminement, depuis la section d'entrée de ladite zone allongée initiale jusqu'à la section de sortie de ladite zone allongée finale, est compris entre 5 et 10 minutes.

23. Procédé selon la revendication 1, **caractérisé en ce que** la puissance absorbée pour le mélange et la progression dudit mélange le long dudit cheminement est au total inférieure à 0,250 kW/kg.

24. Procédé selon la revendication 23, **caractérisé en ce que** ladite puissance est comprise entre 0,165 kW/kg et 0,2 kW/kg.

25. Procédé selon la revendication 23, **caractérisé en ce que** la puissance absorbée dans ladite zone allongée initiale est au moins égale à 75% de la puissance totale absorbée dans ledit cheminement.
